# EUROPEAN PATENT APPLICATION

(11) **EP 4 664 915 A1**
(43) Date of publication of application: **17.12.2025**
(21) Application number: 24769753.5
(22) Date of filing: 29.02.2024
(51) Int. Cl.: H04Q 11/00

(54) **DATA PROCESSING METHOD AND RELATED DEVICE**

(30) Priority: 10.03.2023 CN 202310259787
(71) Applicant: Huawei Technologies Co., Ltd., Shenzhen, Guangdong 518129 (CN)
(72) Inventor: SUN, Liang, Shenzhen, Guangdong 518129 (CN)
(74) Representative: Huawei European IPR
(86) International application number: PCT/CN2024/079210
(87) International publication number: WO 2024/188059

(57) **Abstract**

This application provides a data processing method, applied to the optical communication field. The data processing method includes the following steps: A sending device obtains a first 66-bit code block stream of a MAC frame. The sending device obtains a first check field based on the first 66-bit code block stream, the first check field is used to check the first 66-bit code block stream. The sending device obtains a second 66-bit code block stream based on the first 66-bit code block stream and the first check field, or adds the first check field to a 66-bit code block following the first 66-bit code block stream. The sending device maps the second 66-bit code block stream to a payload area of a data frame, or maps the first 66-bit code block stream and the following 66-bit code block to the payload area of the data frame. The sending device sends the data frame. In the technical solutions provided in this application, a receiving device can identify, by using the first check field, whether a bit error occurs in the 66-bit code block stream, so that communication reliability is improved.

## Description

This application claims priority to Chinese Patent Application No. CN202310259787.2, filed with the China National Intellectual Property Administration on March 10, 2023 and entitled "DATA PROCESSING METHOD AND RELATED DEVICE", which is incorporated herein by reference in its entirety.

### TECHNICAL FIELD

This application relates to the optical communication field, and in particular, to a data processing method and a related device.

### BACKGROUND

A 66-bit code block in an Ethernet service includes a 64-bit payload and a 2-bit overhead. When an optical transport network (optical transport network, OTN) is used to carry an Ethernet service, a sending device needs to encode a MAC frame in the Ethernet into a plurality of 66-bit code blocks, and then map the plurality of 66-bit code blocks to an OTN frame. A receiving device extracts the 66-bit code blocks from the OTN frame, and then decodes the plurality of 66-bit code blocks into the MAC frame. However, the 2-bit overhead in the 66-bit code block indicates a code block type of the 66-bit code block. The code block type of the 66-bit code block includes a data code block or a control code block. When a bit error occurs in the 2-bit overhead in the 66-bit code block, the receiving device incorrectly determines the code block type. The receiving device obtains an incorrect MAC frame based on the incorrectly determined 66-bit code block.

### SUMMARY

This application provides a data processing method and a related device. A receiving device can identify, by using a first check field, whether a bit error occurs in a 66-bit code block stream, so that communication reliability is improved.

A first aspect of this application provides a data processing method. The data processing method may be applied to an optical module, an electrical chip, or a sending device. The sending device may be an optical transport network (optical transport network, OTN) device, a metro transport network (metro transport network, MTN) device, or the like. The following uses an example in which the data processing method is applied to the sending device for description. The data processing method includes the following steps: The sending device obtains a 66-bit code block stream of a MAC frame. The MAC frame includes a frame check sequence (frame check sequence, FCS) field. The sending device obtains a first check field based on target data. The first check field is used to check the target data. The target data is the MAC frame or the 66-bit code block stream. A code block in the 66-bit code block stream is used to carry the obtained first check field. Alternatively, a 66-bit code block following the 66-bit code block stream is used to carry the obtained first check field. The sending device maps the 66-bit code block stream to a payload area of a data frame. The data frame may be an OTN frame, a flexible Ethernet (flexible Ethernet, FlexE) frame, or an MTN frame. The sending device sends the data frame.

In an optional manner of the first aspect, the target data is the 66-bit code block stream. That the sending device obtains the 66-bit code block stream of the MAC frame includes: The sending device obtains the MAC frame, and encodes the MAC frame into a first 66-bit code block stream. Alternatively, the sending device receives a first 66-bit code block stream from another device. The data processing method further includes the following steps: The sending device obtains a second 66-bit code block stream based on the first 66-bit code block stream and the first check field, or adds the first check field to a 66-bit code block following the first 66-bit code block stream. That the sending device maps the 66-bit code block stream to the payload area of the data frame includes: The sending device maps the second 66-bit code block stream to the payload area of the data frame, or maps the first 66-bit code block stream and the following 66-bit code block to the payload area of the data frame. The 66-bit code block stream is checked, so that a receiving device can identify whether a bit error occurs in the 66-bit code block stream without decoding the 66-bit code block stream. Therefore, in this embodiment of this application, check efficiency can be improved. In another optional manner of the first aspect, the target data is the MAC frame. That the sending device obtains the 66-bit code block stream of the MAC frame includes: The sending device obtains the MAC frame, and encodes the MAC frame into the 66-bit code block stream. In a communication system, one or more intermediate nodes may be included between the receiving device and the sending device. The intermediate node directly forwards the 66-bit code block stream, and does not need to decode the 66-bit code block stream. Therefore, when the target data is the MAC frame, the intermediate node may not need to check the MAC frame, so that a transmission delay of the 66-bit code block stream is shortened.

In an optional manner of the first aspect, the following 66-bit code block is an S control code block. An original S control code block is used to carry content of a preamble (Preamble) field in the MAC frame. The content of the preamble field is fixed content. Therefore, the S control code block is used to carry the first check field, so that impact on the following MAC frame can be reduced. Therefore, in this application, reliability of data transmission can be improved. In another optional manner of the first aspect, the following 66-bit code block is an I control code block. When there is a long interval between two MAC frames, the sending device may insert an I control code block between two 66-bit code block streams. The two 66-bit code block streams are in one-to-one correspondence with the two MAC frames. The original I control code block is used to fill useless data. When the first check field is located in the S control code block in the second 66-bit code block stream, the receiving device can receive the S control code block only after the receiving device receives one or more I control code blocks. This reduces check efficiency. Therefore, the first check field is carried in the I control code block, so that check efficiency can be improved. In still another optional manner of the first aspect, the following 66-bit code block is a custom control code block. The first check field is carried in the custom control code block, so that impact on the following 66-bit code block stream can be reduced. Therefore, in this application, reliability of data transmission can be improved.

In an optional manner of the first aspect, a value of a control block type field of the custom control code block is 0x00. 0x00 is a hexadecimal number. The hexadecimal number 0x00 can be converted into a binary number 0000 0000. When the control block type field is 0x00, there may be a difference of at least two bits between the control block type field and a control block type field of another control code block. Therefore, even if a 1-bit error occurs in the control block type field, the receiving device does not identify the custom control code block as another control code block. Therefore, in this application, reliability of transmission of the first check field can be improved.

In an optional manner of the first aspect, the S control code block in the 66-bit code block stream is used to carry the first check field. The first check field is carried in the 66-bit code block stream, so that check efficiency of the receiving device can be improved. In addition, an original S control code block is used to carry the content of the preamble field in the MAC frame. Therefore, the S control code block is used to carry the first check field, so that impact on the MAC frame can be reduced.

In an optional manner of the first aspect, the first check field includes a first subfield and a second subfield. The first subfield is used to check a length of the 66-bit code block stream. The second subfield is used to check content of the 66-bit code block stream. Accuracy of bit error identification can be improved through the length check and the content check. Therefore, in this application, reliability of data transmission can be improved.

In an optional manner of the first aspect, the first subfield indicates a quantity of 66-bit code blocks included in the 66-bit code block stream. A size of the first subfield can be reduced by indicating the quantity of 66-bit code blocks. Therefore, in this application, transmission resources can be saved.

In an optional manner of the first aspect, a size of the first subfield is 2 bytes. A maximum length of the MAC frame is 9600 bytes. In this case, the quantity of 66-bit code blocks in the 66-bit code block stream is approximately 1200. Therefore, the size of the first subfield is controlled to be 2 bytes, so that transmission resources can be saved.

In an optional manner of the first aspect, a size of the second subfield is 4 bytes. To improve reliability of the content check, the size of the second subfield may be greater than the size of the first subfield. In addition, a size of available space of one control code block is 7 bytes. The size of the second subfield is limited to 4 bytes, so that transmission of the first subfield and the second subfield can be performed in one control code block. When the size of the second subfield is greater than 7 bytes, the sending device needs to use at least two control code blocks to carry the first subfield and the second subfield. Therefore, in this embodiment of this application, a quantity of control code blocks can be reduced, so that transmission efficiency is improved.

In an optional manner of the first aspect, the 66-bit code block stream further includes a second check field, or the following 66-bit code block further includes a second check field. The second check field is used to check the first check field. The second check field is added, so that reliability of the first check field whose transmission is performed can be improved. Therefore, in this application, reliability of data transmission can be improved.

In an optional manner of the first aspect, a size of the second check field is 1 byte. A size of available space of one control code block is 7 bytes. When a size of the first check field is less than or equal to 6 bytes, one control code block may be used for transmission of the first check field and the second check field. Therefore, in this embodiment of this application, a quantity of control code blocks can be reduced, so that transmission efficiency is improved.

In an optional manner of the first aspect, the sending device maps the second 66-bit code block stream to a service frame, and maps the service frame to the payload area of the data frame. The second 66-bit code block stream is first mapped to the service frame, and the service frame is then mapped to the data frame, so that a minimum granularity of a service can be reduced, thereby increasing a quantity of carried services. In another optional manner of the first aspect, the sending device maps the first 66-bit code block stream and the following 66-bit code block to a service frame, and then maps the service frame to the data frame.

A second aspect of this application provides a data processing method. The data processing method may be applied to an optical module, an electrical chip, or a receiving device. The receiving device may be an OTN device, an MTN device, or the like. The following uses an example in which the data processing method is applied to the receiving device for description. The data processing method includes the following steps: The receiving device obtains a data frame. The receiving device extracts a 66-bit code block stream from a payload area of the data frame. A code block in the 66-bit code block stream is used to carry an obtained first check field. Alternatively, a 66-bit code block following the 66-bit code block stream is used to carry an obtained first check field. The receiving device checks, by using the first check field, a MAC frame corresponding to the 66-bit code block stream or the 66-bit code block stream. The MAC frame includes an FCS field.

In an optional manner of the second aspect, the receiving device checks, by using the first check field, the MAC frame corresponding to the 66-bit code block stream. The data processing method further includes the following steps: The receiving device decodes the 66-bit code block stream into the MAC frame. In another optional manner of the second aspect, the receiving device checks the 66-bit code block stream by using the first check field.

In an optional manner of the second aspect, an S control code block in the 66-bit code block stream includes the first check field. The data processing method further includes the following steps: The receiving device replaces the first check field with content of a preamble field in the MAC frame, to obtain a modified 66-bit code block stream. The receiving device sends the modified 66-bit code block stream to another device. The another device does not necessarily support a check function of the first check field. The 66-bit code block stream is restored, so that impact of the first check field on the another device that restores the MAC frame can be reduced. Therefore, in this application, reliability of restoring the MAC frame can be improved. In another optional manner of the second aspect, the 66-bit code block following the 66-bit code block stream includes the first check field, and the data processing method further includes the following steps: The receiving device modifies the following 66-bit code block. After modifying the following 66-bit code block, the receiving device may send the following 66-bit code block to another device. The another device does not necessarily support a check function of the first check field. The following 66-bit code block is restored, so that impact of the first check field on the another device can be reduced, thereby improving communication reliability. In another optional manner of the second aspect, the following 66-bit code block is an S control code block. The receiving device replaces the first check field with the content of the preamble field in the MAC frame. The following 66-bit code block is restored, so that impact of the first check field on another device that restores the following MAC frame can be reduced. Therefore, in this application, reliability of restoring the following MAC frame can be improved. In another optional manner of the second aspect, the following 66-bit code block is an I control code block. The receiving device modifies content of the first check field to 0. In another optional manner of the second aspect, the following 66-bit code block is a custom control code block. The receiving device deletes the custom control code block. Another device may not necessarily be capable of identifying the custom control code block. In addition, a check function of the custom control code block may conflict with some functions of the another device. This affects running of the another device. Therefore, in this application, communication reliability can be improved.

In an optional manner of the second aspect, the data processing method further includes the following steps: If the 66-bit code block stream fails to pass the check of the first check field, the receiving device modifies a synchronization field of a T control code block in the 66-bit code block stream to 11 or 00. In subsequent processing, the receiving device can identify the 66-bit code block stream as an incorrect code block stream based on content of the synchronization field, to discard the 66-bit code block stream. Therefore, in this application, communication reliability can be improved.

In an optional manner of the second aspect, the 66-bit code block stream further includes a second check field, or the following 66-bit code block further includes a second check field. The data processing method further includes the following step: The receiving device checks the first check field by using the second check field.

A third aspect of this application provides a sending apparatus. The sending apparatus includes an obtaining module, a processing module, a mapping module, and a sending module. The obtaining module is configured to obtain a 66-bit code block stream of a MAC frame. The processing module is configured to obtain a first check field based on target data. The first check field is used to check the target data. The target data is the MAC frame or the 66-bit code block stream. A code block in the 66-bit code block stream is used to carry the obtained first check field. Alternatively, a 66-bit code block following the 66-bit code block stream is used to carry the obtained first check field. The mapping module is configured to map the 66-bit code block stream to a payload area of a data frame. The data frame may be an OTN frame, a FlexE frame, or an MTN frame. The sending module is configured to send the data frame. In an optional manner of the third aspect, the module in the sending apparatus may be configured to perform the method according to any one of the optional manners of the first aspect. For example, the mapping module is configured to map the 66-bit code block stream to a service frame, and map the service frame to the payload area of the data frame. For another example, the obtaining module is configured to receive the 66-bit code block stream from another device.

A fourth aspect of this application provides a receiving apparatus. The receiving apparatus includes a receiving module, an extraction module, and a check module. The receiving module is configured to receive a data frame. The extraction module is configured to extract a 66-bit code block stream from a payload area of the data frame. The 66-bit code block stream includes a first check field. Alternatively, a 66-bit code block following the 66-bit code block stream includes a first check field. The check module is configured to check, by using the first check field, a MAC frame corresponding to the 66-bit code block stream or the 66-bit code block stream. The MAC frame includes an FCS field.

In an optional manner of the fourth aspect, the module in the sending apparatus may be configured to perform the method according to any one of the optional manners of the second aspect. For example, the check module is further configured to check the first check field by using a second check field. For another example, the sending apparatus further includes a modification module and a sending module. The modification module is configured to modify the following 66-bit code block. After the following 66-bit code block is modified, the sending module is configured to send the following 66-bit code block to another device.

A fifth aspect of this application provides a sending device. The sending device includes a processor and a transceiver. The processor is configured to perform the method according to any one of the first aspect or the optional manners of the first aspect, to obtain a data frame. The transceiver is configured to send the data frame.

A sixth aspect of this application provides a receiving device. The receiving device includes a processor and a transceiver. The transceiver is configured to receive a data frame. The processor is configured to perform the method according to any one of the second aspect or the optional manners of the second aspect.

A seventh aspect of this application provides a communication system. The communication system includes a sending device and a receiving device. The sending device is configured to obtain a 66-bit code block stream of a MAC frame. The MAC frame includes an FCS field. The sending device is configured to obtain a first check field based on target data. The target data is the MAC frame or the 66-bit code block stream. A code block in the 66-bit code block stream is used to carry the obtained first check field. Alternatively, a 66-bit code block following the 66-bit code block stream is used to carry the obtained first check field. The sending device is configured to map the 66-bit code block stream to a payload area of a data frame. The sending device sends the data frame to the receiving device. The receiving device is configured to receive the data frame. The receiving device is configured to extract the 66-bit code block stream from the payload area of the data frame. The receiving device is configured to check, by using the first check field, the MAC frame corresponding to the 66-bit code block stream or the 66-bit code block stream.

In an optional manner of the seventh aspect, the sending device is further configured to perform the method according to any one of the first aspect or the optional manners of the first aspect, and/or the receiving device is further configured to perform the method according to any one of the second aspect or the optional manners of the second aspect.

An eighth aspect of this application provides a data frame. The data frame includes a payload area and an overhead area. The payload area includes a 66-bit code block stream. The 66-bit code block stream includes a first check field. Alternatively, a 66-bit code block following the 66-bit code block stream includes a first check field. The first check field is used to check a MAC frame corresponding to the 66-bit code block stream or the 66-bit code block stream. The MAC frame includes an FCS field.

In an optional manner of the eighth aspect, the data frame is an optical service unit (optical service unit, OSU) frame, an OTN frame, a FlexE frame, or an MTN frame.

It should be understood that there is related content in the foregoing different aspects. Therefore, descriptions of an optional manner in any aspect may be capable of serving as content in an optional manner in another aspect, and details are not described herein again.

A ninth aspect of this application provides a computer storage medium. The computer storage medium stores instructions, and when the instructions are executed on a computer, the computer is enabled to perform the method according to any one of the first aspect or the implementations of the first aspect; or the computer is enabled to perform the method according to any one of the second aspect or the implementations of the second aspect.

A tenth aspect of this application provides a computer program product. When the computer program product is executed on a computer, the computer is enabled to perform the method according to any one of the first aspect or the implementations of the first aspect; or the computer is enabled to perform the method according to any one of the second aspect or the implementations of the second aspect.

### BRIEF DESCRIPTION OF DRAWINGS

FIG. 1 is a diagram of a structure of an OTN;
FIG. 2 is a diagram of a structure of an OTN device;
FIG. 3 is a diagram of a structure of a data code block and a control code block;
FIG. 4 is a first schematic flowchart of a data processing method according to an embodiment of this application;
FIG. 5 is a diagram of encoding a MAC frame into a 66-bit code block stream;
FIG. 6 is a diagram of a structure of a MAC frame;
FIG. 7 is a first diagram of encoding a MAC frame into a 66-bit code block stream according to an embodiment of this application;
FIG. 8 is a second diagram of encoding a MAC frame into a 66-bit code block stream according to an embodiment of this application;
FIG. 9 is a third diagram of encoding a MAC frame into a 66-bit code block stream according to an embodiment of this application;
FIG. 10 is a fourth diagram of encoding a MAC frame into a 66-bit code block stream according to an embodiment of this application;
FIG. 11 is a diagram of a structure of a MAC frame according to an embodiment of this application;
FIG. 12a is a diagram of a first structure of a field c according to an embodiment of this application;
FIG. 12b is a diagram of a second structure of a field c according to an embodiment of this application;
FIG. 12c is a diagram of a third structure of a field c according to an embodiment of this application;
FIG. 12d is a diagram of a fourth structure of a field c according to an embodiment of this application;
FIG. 13 is a diagram of directly mapping a 66-bit code block stream to an OTN frame according to an embodiment of this application;
FIG. 14 is a diagram of indirectly mapping a 66-bit code block stream to an OTN frame according to an embodiment of this application;
FIG. 15 is a second schematic flowchart of a data processing method according to an embodiment of this application;
FIG. 16 is a third schematic flowchart of a data processing method according to an embodiment of this application;
FIG. 17 is a fourth schematic flowchart of a data processing method according to an embodiment of this application;
FIG. 18 is a diagram of a structure of a sending apparatus according to an embodiment of this application;
FIG. 19 is a diagram of a structure of a receiving apparatus according to an embodiment of this application;
FIG. 20 is a diagram of a structure of a communication device according to an embodiment of this application; and
FIG. 21 is a diagram of a structure of a communication system according to an embodiment of this application.

### DESCRIPTION OF EMBODIMENTS

Some terms in this application are first described, to facilitate understanding of a person skilled in the art.
(1) "A plurality of" refers to two or more. "And/or" describes an association relationship between associated objects, and three relationships may exist. For example, A and/or B may represent the following three cases: Only A exists, both A and B exist, and only B exists. In addition, in descriptions of this application, terms such as "first", "second", and "target" are merely used for distinguishing descriptions, and should not be understood as an indication or implication of relative importance, or as an indication or implication of a sequence.
(2) Mapping A to B mentioned in this application refers to encapsulating A into B. For example, mapping an optical service unit (optical service unit, OSU) frame to an optical transport network (optical transport network, OTN) frame refers to encapsulating the OSU frame or an OSU signal into the OTN frame.
(3) Unless otherwise specified, detailed descriptions of some technical features in an embodiment may also be used to explain corresponding technical features mentioned in another embodiment. For example, a function of a first check field 1 in an embodiment may also be applied to a first check field 1 mentioned in another embodiment. In addition, in this application, same or similar reference numerals are used to represent components or method steps with same or similar functions in different embodiments.

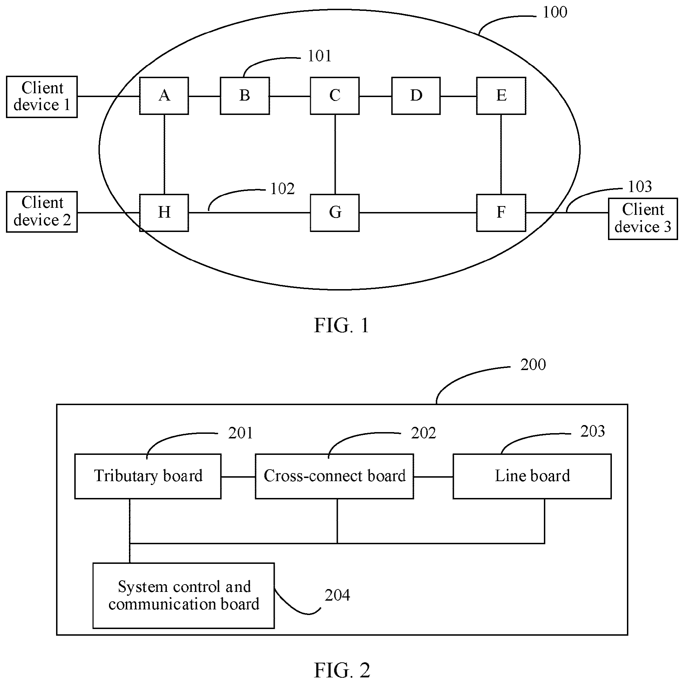

Embodiments of this application are applicable to an optical network like an optical transport network or a metro transport network. The optical transport network includes an OTN or a flexible Ethernet (flexible Ethernet, FlexE). In subsequent descriptions of this application, the OTN is used as an example for description. An OTN is usually formed by connecting a plurality of OTN devices through an optical fiber, and may be formed into different topological types such as a line type, a ring type, and a mesh type based on specific requirements. FIG. 1 is a diagram of a structure of an OTN according to this application. As shown in FIG. 1, an OTN 100 includes eight OTN devices 101, namely, OTN devices A to H. 102 indicates an optical fiber, configured to connect two devices. 103 indicates a client service interface, configured to receive or send client service data. As shown in FIG. 1, the OTN 100 is configured to perform transmission of service data for client devices 1 to 3. The client device is connected to the OTN device through a client service interface. For example, in FIG. 1, the client devices 1 to 3 are respectively connected to the OTN devices A, H, and F.

Based on an actual requirement, an OTN device may have different functions. Usually, the OTN device includes an optical layer device, an electrical layer device, and a photoelectric hybrid device. The optical layer device is a device that can process an optical layer signal, for example, an optical amplifier or an optical add-drop multiplexer (optical add-drop multiplexer, OADM). The optical amplifier is configured to amplify an optical signal, to support a longer transmission distance while ensuring specific performance of the optical signal. The OADM is configured to perform space transformation on an optical signal, so that the optical signal may be output from different output ports (sometimes referred to as directions). The electrical layer device is a device that can process an electrical layer signal, for example, a device that can process an OTN signal. The photoelectric hybrid device is a device that has a capability of processing an optical layer signal and an electrical layer signal. It should be noted that, one OTN device may integrate a plurality of different functions based on a specific integration requirement. Technical solutions provided in this application are applicable to OTN devices that have different forms and degrees of integration and that include an electrical layer function.

It should be noted that a data frame structure used by an optical transport device in this embodiment of this application may be an OTN frame. The OTN frame is used to carry various types of service data and provides various management and monitoring functions. The OTN frame may be an optical data unit k (optical data unit k, ODUk) frame, an ODUCn frame, or an ODUflex frame, or may be an optical transport unit k (optical transport unit k, OTUk) frame, an OTUCn frame, a flexible OTN (FlexO) frame, or the like. A difference between an ODU frame and an OTU frame lies in that the OTU frame includes an ODU frame and an OTU overhead. k represents different rate levels. For example, k=1 indicates 2.5 Gbps, and k=4 indicates 100 Gbps. Cn represents a variable rate, and is specifically a rate that is a positive integer multiple of 100 Gbps. Unless otherwise specified, the ODU frame is any one of the ODUk frame, the ODUCn frame, or the ODUflex frame, and the OTU frame is any one of the OTUk frame, the OTUCn frame, or the FlexO frame. It should be further noted that, with development of optical transport network technologies, a new type of OTN frame may be defined, and is also applicable to this application. In addition, the method disclosed in this application is also applicable to another optical transport network frame like a FlexE frame.

FIG. 2 is a diagram of a structure of an OTN device according to this application. An OTN device 200 may be any one of the OTN devices A to H in FIG. 1. As shown in FIG. 2, the OTN device 200 includes a tributary board 201, a cross-connect board 202, a line board 203, an optical layer processing board (not shown in the figure), and a system control and communication board 204.

The tributary board 201, the cross-connect board 202, and the line board 203 are configured to process an electrical layer signal. The tributary board 201 is configured to receive and send various client services such as an SDH service, a packet service, an Ethernet service, and/or a fronthaul service. Further, the tributary board 201 may be divided into a client-side optical transceiver module and a signal processor. The client-side optical transceiver module may also be referred to as an optical transceiver, and is configured to receive and/or send service data. The signal processor is configured to map service data to a data frame, and demap the service data from the data frame. The cross-connect board 202 is configured to exchange a data frame, to complete exchange of one or more types of data frames. The line board 203 mainly implements processing of a line-side data frame. Specifically, the line board 203 may be divided into a line-side optical module and a signal processor. The line-side optical module may be referred to as an optical transceiver, and is configured to receive and/or send a data frame. The signal processor is configured to multiplex and demultiplex a line-side data frame, or map and demap a line-side data frame. The system control and communication board 204 is configured to implement system control, and specifically, may collect information from different boards or send a control instruction to a corresponding board. It should be noted that, unless otherwise specified, there may be one or more specific components (for example, signal processors). This is not limited in this application. It should be further noted that types, function designs, and a quantity of boards included in the device are not limited in this application. It should be noted that during specific implementation, the foregoing two boards may alternatively be designed as one board. In addition, the network device may further include a standby power supply, a heat dissipation fan, and the like.

It should be understood that FIG. 2 is merely an example of the OTN device provided in this application. The OTN device may include different types and quantities of boards based on specific requirements. For example, an OTN device used as a core node includes no tributary board 201. For another example, an OTN device used as an edge node includes a plurality of tributary boards 201, or includes no optical cross-connect board 202. For still another example, an OTN device supporting only an electrical layer function may include no optical layer processing board.

In FIG. 1, data received by the OTN device from the client device may be a 66-bit code block stream or a MAC frame. The 66-bit code block stream is a code block stream including a plurality of 66-bit code blocks. The 66-bit code block is also referred to as a 64B/66B code block or a 66-bit code block. The 66-bit code block includes a 2-bit overhead and a 64-bit payload. A code block type of the 66-bit code block includes a data code block or a control code block. The data code block is used to carry data. The control code block is used to transfer control information such as a start identifier or an end identifier of a medium access control (medium access control, MAC) address frame, or a padding indication.

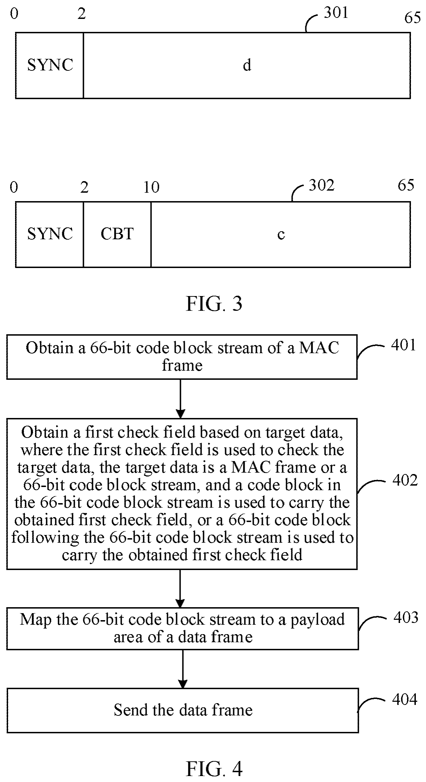

FIG. 3 is a diagram of a structure of a data code block and a control code block according to this application. As shown in FIG. 3, a data code block 301 and a control code block 302 include a synchronization (synchronization, SYNC) field. A size of the SYNC field is 2 bits. Data carried in the SYNC field indicates a code block type of a 66-bit code bock. For example, 01 indicates that the code block type of the 66-bit code block is a data code block. 10 indicates that the code block type of the 66-bit code block is a control code block. The data code block 301 further includes a field d. A size of the field d is 64 bits. The field d is used to carry data. The control code block 302 further includes a control block type (control block type, CBT) field and a field c. A size of the CBT field is 8 bits. A value of the CBT field may be 0x1E, 0x78, 0x4B, 0x87, 0x99, or the like. A size of the field c is 56 bits. The field c is used to carry control code.

When data received by an OTN device from a client device is a MAC frame, the OTN device needs to encode the MAC frame into a 66-bit code block stream. After obtaining the 66-bit code block stream, the OTN device maps the 66-bit code block stream to a payload area of an OTN frame, and transmits the OTN frame to another OTN device. The another OTN device extracts 66-bit code blocks from the OTN frame, and then decodes the plurality of 66-bit code blocks into the MAC frame. However, a SYNC field in the 66-bit code block indicates a code block type of the 66-bit code block. When a bit error occurs in the SYNC field, the another OTN device incorrectly determines the code block type, and obtains an incorrect MAC frame based on the incorrectly determined 66-bit code block. If the incorrect MAC frame passes frame check sequence (frame check sequence, FCS) check, a receiving device cannot identify whether the MAC frame is incorrect. Consequently, communication reliability is reduced.

Therefore, this application provides a data processing method. FIG. 4 is a first schematic flowchart of a data processing method according to an embodiment of this application. The data processing method may be applied to an optical module, an electrical chip, or a sending device. The sending device may be an OTN device, an MTN device, or the like. The following uses an example in which the data processing method is applied to the sending device for description. As shown in FIG. 4, the data processing method includes the following steps.

In step 401, the sending device obtains a 66-bit code block stream of a MAC frame.

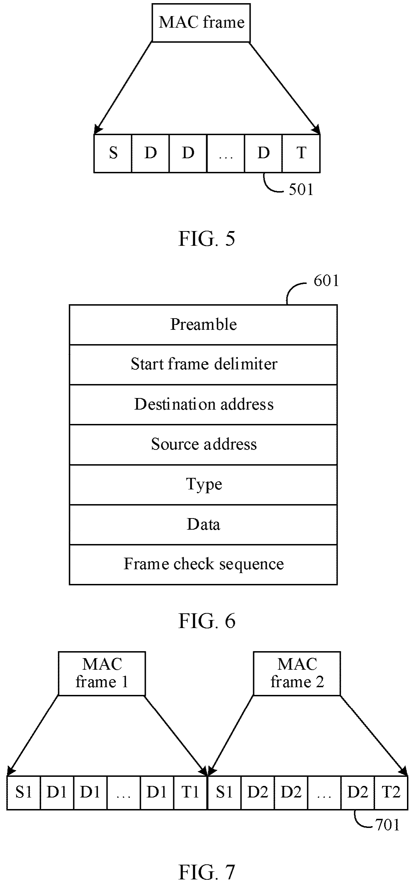

The sending device may receive the 66-bit code block stream or the MAC frame from a client device. When data received by the sending device from the client device is the MAC frame, the sending device needs to encode the MAC frame into the 66-bit code block stream. Alternatively, the sending device may generate the MAC frame based on data that needs to be sent, and encode the MAC frame into the 66-bit code block stream. FIG. 5 is a first diagram of encoding a MAC frame into a 66-bit code block stream. As shown in FIG. 5, the sending device encodes a MAC frame into a 66-bit code block stream 501. The 66-bit code block stream 501 includes one S control code block, a plurality of data code blocks, and one T control code block. A SYNC field of the data code block is 01. A SYNC field of the S control code block and the T control code block is 10. A CBT field of the S control code block is 0x78. A CBT field of the T control code block may be 0x87, 0x99, 0xAA, 0xB4, 0xCC, 0xD2, 0xE1, or 0xFF.

It should be understood that, in subsequent examples, for ease of description, the S control code block may be referred to as an S1 control code block, an S2 control code block, or the like. Similarly, the T control code block may also be referred to as a T1 control code block, a T2 control code block, or the like. The data code block may also be referred to as a D1 data code block, a D2 data code block, or the like.

There is a correspondence between the 66-bit code block stream 501 and data in the MAC frame. For example, FIG. 6 is a diagram of a structure of a MAC frame. As shown in FIG. 6, a MAC frame 601 includes a preamble (Preamble) field, a start frame delimiter (start frame delimiter, SFD) field, a destination address (destination address, DA) field, a source address (source address, SA) field, a type (type) field, a data (data) field, and a frame check sequence (frame check sequence, FCS) field. An S control code block is used to carry content of the preamble field in the MAC frame. A plurality of data code blocks are used to carry content of remaining fields in the MAC frame. A T control code block represents an end of a MAC frame, and may be used to carry content of bytes 0 to 7 in the MAC frame.

In actual application, the sending device may continuously encode a plurality of MAC frames into a 66-bit code block stream. FIG. 7 is a first diagram of encoding a MAC frame into a 66-bit code block stream according to an embodiment of this application. As shown in FIG. 7, the sending device encodes a MAC frame 1 and a MAC frame 2 into a 66-bit code block stream 701. Specifically, the 66-bit code block stream 701 includes a first 66-bit code block stream and a third 66-bit code block stream. The sending device encodes the MAC frame 1 into the first 66-bit code block stream. The first 66-bit code block stream includes one S1 control code block, a plurality of D1 data code blocks, and one T1 control code block. The sending device encodes the MAC frame 2 into the third 66-bit code block stream. The third 66-bit code block stream includes one S2 control code block, a plurality of D2 data code blocks, and one T2 control code block.

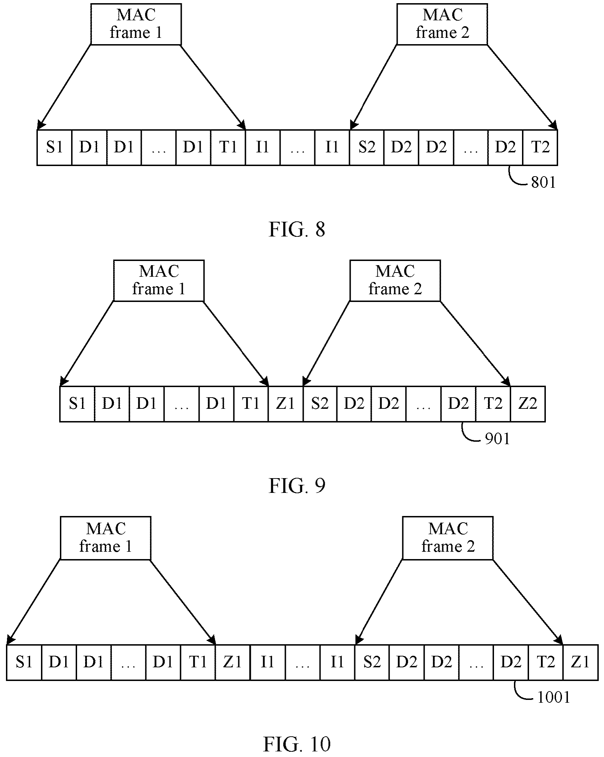

When there is a long interval between the two MAC frames, the sending device may insert an I control code block between the first 66-bit code block stream and the third 66-bit code block stream. In the I control code block, a value of SYNC is 10, and a value of CBT is 0x1E. The I control code block may be referred to as an I1 control code block, an I2 control code block, or the like. FIG. 8 is a second diagram of encoding a MAC frame into a 66-bit code block stream according to an embodiment of this application. As shown in FIG. 8, the sending device encodes a MAC frame 1 and a MAC frame 2 into a 66-bit code block stream 801. On the basis of FIG. 7, the 66-bit code block stream 801 further includes one or more I1 control code blocks. The I1 control code block is located between a first 66-bit code block stream and a third 66-bit code block stream.

In this embodiment of this application, the sending device may insert a custom control code block after each T control code block. The custom control code block may be referred to as a Z1 control code block, a Z2 control code block, or the like. A SYNC field of the custom control code block is 10. To distinguish another control code block from the custom control code block, content of a CBT field of the custom control code block is not 0x1E, 0x78, 0x4B, 0x87, 0x99, 0xAA, 0xB4, 0xCC, 0xD2, 0xE1, or 0xFF. In addition, to increase a difference between the CBT field of the custom control code block and a CBT field of another control code block, the CBT field of the custom control code block may be 0x00.

FIG. 9 is a third diagram of encoding a MAC frame into a 66-bit code block stream according to an embodiment of this application. As shown in FIG. 9, the sending device encodes a MAC frame 1 and a MAC frame 2 into a 66-bit code block stream 901. On the basis of FIG. 7, the 66-bit code block stream 901 further includes one Z1 control code block and one Z2 control code block. The Z1 control code block is located after a T1 control code block. The Z2 control code block is located after a T2 control code block.

FIG. 10 is a fourth diagram of encoding a MAC frame into a 66-bit code block stream according to an embodiment of this application. As shown in FIG. 10, the sending device encodes a MAC frame 1 and a MAC frame 2 into a 66-bit code block stream 1001. On the basis of FIG. 8, the 66-bit code block stream 1001 further includes one Z1 control code block and one Z2 control code block. The Z1 control code block is located between the T1 control code block and the I1 control code block.

It should be understood that, in FIG. 5 and FIG. 7 to FIG. 10, only one or two MAC frames are used as an example for description in this embodiment of this application. In actual application, the sending device may encode more MAC frames into a 66-bit code block stream. For example, in FIG. 7, the sending device further encodes a MAC frame 3 into the 66-bit code block stream 701. In this case, the 66-bit code block stream 701 further includes a fourth 66-bit code block stream. The fourth 66-bit code block stream includes one S3 control code block, a plurality of D3 data code blocks, and one T3 control code block. There may be one or more I2 control code blocks or no I2 control code block between the fourth 66-bit code block stream and the third 66-bit code block stream.

It should be understood that, in the foregoing examples in FIG. 5 to FIG. 10, a case in which the sending device encodes the MAC frame into the 66-bit code block stream is described. When the sending device receives the 66-bit code block stream from the client device, the 66-bit code block stream may be obtained by the client device through encoding according to the foregoing method.

In step 402, the sending device obtains a first check field based on target data, where the first check field is used to check the target data, the target data is a MAC frame or a 66-bit code block stream, and a code block in the 66-bit code block stream is used to carry the obtained first check field, or a 66-bit code block following the 66-bit code block stream is used to carry the obtained first check field.

When the target data is the MAC frame, the sending device obtains the first check field based on the MAC frame. For example, the sending device performs a cyclic redundancy check (cyclic redundancy check, CRC) check on the MAC frame to obtain a CRC field. The sending device uses the CRC field as the first check field. If the sending device receives the 66-bit code block stream from the client device, the sending device first decodes the 66-bit code block stream into the MAC frame. Decoding is an inverse process of encoding. Therefore, for descriptions of the decoding, refer to the foregoing descriptions in any one of FIG. 5 to FIG. 10. After obtaining the MAC frame through decoding, the sending device obtains the first check field based on the MAC frame. After obtaining the first check field, the sending device encodes the MAC frame into the 66-bit code block stream. Therefore, in this embodiment of this application, there is no strict time sequence limitation between step 402 and step 401. For example, the sending device may first obtain the first check field, and then encode the MAC frame into the 66-bit code block stream.

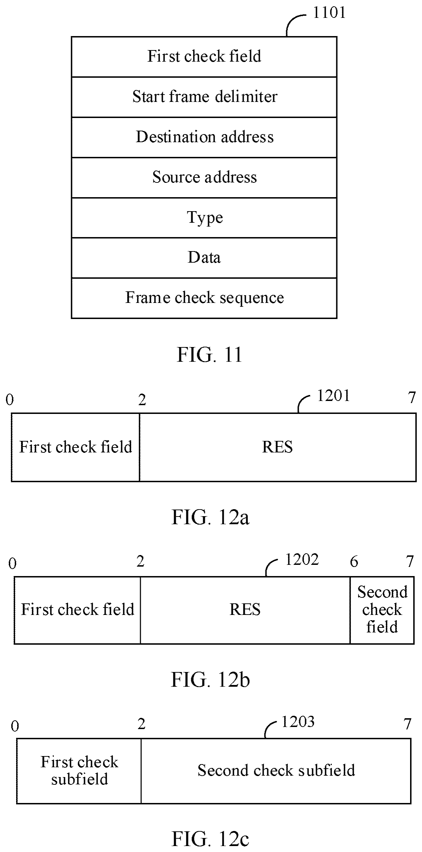

When the target data is the MAC frame, the sending device may replace the preamble field of the MAC frame with the obtained first check field, to obtain a new MAC frame. FIG. 11 is a diagram of a structure of a MAC frame according to an embodiment of this application. As shown in FIG. 11, on the basis of FIG. 6, the sending device replaces the preamble field in FIG. 6 with the first check field. After obtaining a new MAC frame 1101, the sending device encodes the new MAC frame into a 66-bit code block stream in the encoding manner described in step 401. In this case, the first check field is encoded into an S control code block in the 66-bit code block stream. Alternatively, the sending device first encodes the MAC frame into the 66-bit code block stream based on the descriptions in step 401. The sending device fills the 66-bit code block stream or a 66-bit code block following the 66-bit code block stream with the first check field.

When the target data is the 66-bit code block stream, the sending device obtains the first check field based on the 66-bit code block stream. For example, the sending device obtains a quantity of 66-bit code blocks in the first 66-bit code block stream. The sending device uses the quantity of first 66-bit code blocks as the first check field. If the sending device receives the MAC frame from the client device, the sending device first encodes the MAC frame into the 66-bit code block stream. For descriptions of the encoding, refer to the foregoing descriptions in any one of FIG. 5 to FIG. 10. After obtaining the first 66-bit code block stream through encoding, the sending device obtains the first check field based on the first 66-bit code block stream. The sending device fills the first 66-bit code block stream with the first check field, to obtain a second 66-bit code block stream. Alternatively, the sending device adds the first check field to the 66-bit code block following the first 66-bit code block stream.

The 66-bit code block stream, the second 66-bit code block stream, or the 66-bit code block following the 66-bit code block stream is used to carry the obtained first check field. When the 66-bit code block stream or a code block in the second 66-bit code block stream is used to carry the obtained first check field, the 66-bit code block stream or an S control code block in the second 66-bit code block stream includes the first check field. For example, in FIG. 7, the S1 control code block includes a first check field 1 corresponding to the MAC frame 1. The first check field 1 is used to check the MAC frame 1 or the first 66-bit code block stream. The S2 control code block includes a first check field 2 corresponding to the MAC frame 2. The first check field 2 is used to check the MAC frame 2 or the third 66-bit code block stream.

When the 66-bit code block following the 66-bit code block stream is used to carry the obtained first check field, the following 66-bit code block may be an S control code block and/or an I control code block. In this case, the following 66-bit code block may be the S control code block or the I control code block. Alternatively, the following 66-bit code block may be the S control code block and the I control code block.

When the following 66-bit code block is the S control code block, it indicates that a first check field of a current MAC frame is located in an S control code block corresponding to the following MAC frame. For example, in FIG. 8, the S2 control code block includes a first check field 1 corresponding to the MAC frame 1. In FIG. 8, the sending device may be further configured to encode a MAC frame 3 into a fourth 66-bit code block stream. The fourth 66-bit code block stream includes one S3 control code block, a plurality of D3 data code blocks, and one T3 control code block. The S3 control code block includes a first check field 2 corresponding to the MAC frame 2. Similarly, a first check field 3 corresponding to the MAC frame 3 may be located in an S4 control code block corresponding to a MAC frame 4.

When the following 66-bit code block is the I control code block, it indicates that a first check field of a current MAC frame is located in an I control code block between two MAC frames. The two MAC frames include the current MAC frame and the following MAC frame. Therefore, when the I control code block is not included between 66-bit code block streams corresponding to the two MAC frames, the sending device inserts the I control code block between the 66-bit code block streams in an encoding process. For example, in FIG. 7, the sending device inserts the I1 control code block between the first 66-bit code block stream and the third 66-bit code block stream. The I1 control code block includes the first check field 1. In FIG. 7, when no I control code block is included between the fourth 66-bit code block stream and the third 66-bit code block stream, the sending device also inserts the I2 control code block between the fourth 66-bit code block stream and the third 66-bit code block stream. The I2 control code block includes the first check field 2.

When the following 66-bit code block is the S control code block and the I control code block, it indicates that a first check field of a current MAC frame is located in an I control code block between two 66-bit code block streams corresponding to two MAC frames or an S control code corresponding to the following MAC frame. Specifically, when the I control code block is not included between the two 66-bit code block streams corresponding to the two MAC frames, the first check field of the current MAC frame is located in the S control code corresponding to the following MAC frame. When the I control code block is included between the two 66-bit code block streams corresponding to the two MAC frames, the first check field of the current MAC frame is located in the I control code block between the two 66-bit code block streams corresponding to the two MAC frames. For example, in FIG. 7, the I control code block is not included between the first 66-bit code block stream and the third 66-bit code block stream. In this case, the S2 control code block includes the first check field 1. When the I2 control code block is included between the fourth 66-bit code block stream and the third 66-bit code block stream, the I2 control code block includes the first check field 2.

When the 66-bit code block following the 66-bit code block stream includes the first check field, the following 66-bit code block may be a custom control code block. In this case, the first check field of the current MAC frame is located in the custom control code block between the two 66-bit code block streams corresponding to the two MAC frames. For example, in FIG. 10, the Z1 control code block includes a first check field 1. The Z2 control code block includes a first check field 2.

It should be understood that the "following 66-bit code block" does not necessarily refer to a 1^{st} 66-bit code block after the 66-bit code block stream. For example, in FIG. 8, three I1 control code blocks are included between the first 66-bit code block stream and the third 66-bit code block stream. The first check field 1 is located in a 2^{nd} I1 control code block in the three I1 control code blocks. In this case, the 66-bit code block following the first 66-bit code block stream refers to the 2^{nd} I1 control code block in the three I1 control code blocks.

In actual application, when a distance between the control code block carrying the first check field 1 and the first 66-bit code block stream is shorter, the receiving device may check the first 66-bit code block stream or the MAC frame 1 more quickly, so that check efficiency is improved. Therefore, to improve check efficiency, the 1^{st} 66-bit code block after the 66-bit code block stream may include the first check field.

It should be understood that the "following 66-bit code block" does not necessarily refer to one 66-bit code block. For example, in FIG. 8, the three I1 control code blocks are included between the first 66-bit code block stream and the third 66-bit code block stream. The first check field 1 is located in the 1^{st} I1 control code block and the 2^{nd} I1 control code block in the three I1 control code blocks. In this case, the 66-bit code block following the first 66-bit code block stream refers to the first two I1 control code blocks in the three I1 control code blocks. It can be learned from the foregoing descriptions that the first check field 1 corresponding to the MAC frame 1 may be located in the S1 control code block, the S2 control code block, the I1 control code block, or the Z1 control code block. The first check field 1 corresponding to the MAC frame 1 may alternatively be located in the S2 control code block and the I1 control code block. In this embodiment of this application, the first check field 1 may be located in a field c of the foregoing control code block. A size of the first check field 1 is less than or equal to a size of the field c. FIG. 12a is a diagram of a first structure of a field c according to an embodiment of this application. As shown in FIG. 12a, a size of a field c 1201 is 7 bytes. A size of a first check field is 2 bytes. The field c 1201 further includes a 5-byte reserved for future international standardization (Reserved for future international standardization, RES) field.

In actual application, the sending device may further obtain a second check field based on the first check field. The second check field is used to check the first check field. A 66-bit code block stream further includes the second check field, or the following 66-bit code block further includes a second check field. The second check field may alternatively be located in the field c of the foregoing control code block. FIG. 12b is a diagram of a second structure of a field c according to an embodiment of this application. As shown in FIG. 12b, a size of a field c 1202 is 7 bytes. A size of a first check field is 2 bytes. A size of a second check field is 1 byte. The field c 1202 further includes a 4-byte RES field.

In actual application, the first check field may include a first subfield and a second subfield. The first subfield is used to check a length of a MAC frame or a 66-bit code block stream, that is, the first subfield is used for length check. The second subfield is used to check content of the MAC frame or the 66-bit code block stream, that is, the second subfield is used for content check. FIG. 12c is a diagram of a third structure of a field c according to an embodiment of this application. As shown in FIG. 12c, a size of a field c 1203 is 7 bytes. A size of a first check field is equal to the size of the field c 1203. The first check field includes a first subfield and a second subfield. A size of the first subfield is 2 bytes. A size of the second subfield is 5 bytes.

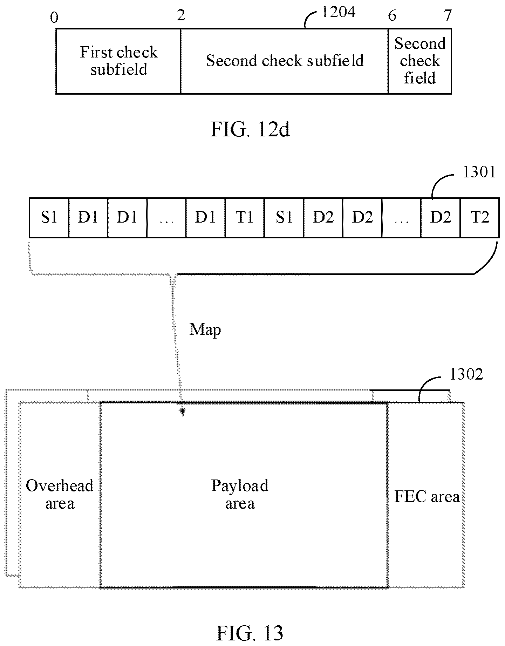

FIG. 12d is a diagram of a fourth structure of a field c according to an embodiment of this application. As shown in FIG. 12d, a size of a field c 1204 is 7 bytes. A first check field includes a first subfield and a second subfield. A size of the first subfield is 2 bytes. A size of the second subfield is 4 bytes. The field c 1204 or the first check field further includes a second check field, and a size of the second check field is 1 byte.

In step 403, the sending device maps the 66-bit code block stream to a payload area of a data frame.

The sending device may directly map the 66-bit code block stream to the payload area of the data frame, or may first map the 66-bit code block stream to a service frame, and then map the service frame to the data frame. The data frame may be an OTN frame, a FlexE frame, or an MTN frame. The service frame may be an OSU frame or another data frame having a structure similar to the OSU frame. In this embodiment of this application, an example in which the data frame is the OTN frame and the service frame is an OSU frame is used for description.

When the target data is the MAC frame, the sending device maps the 66-bit code block stream to the payload area of the data frame. The 66-bit code block stream includes the first check field, or the 66-bit code block following the 66-bit code block stream includes the first check field. When the target data is the first 66-bit code block stream, the sending device maps the second 66-bit code block stream to the payload area of the data frame, or maps the first 66-bit code block stream and the following 66-bit code block to the payload area of the data frame. When the sending device maps the second 66-bit code block stream to the payload area of the data frame, the second 66-bit code block stream includes the first check field. When the sending device maps the first 66-bit code block stream and the following 66-bit code block to the payload area of the data frame, the following 66-bit code block includes the first check field. FIG. 13 is a diagram of directly mapping a 66-bit code block stream to an OTN frame according to an embodiment of this application. As shown in FIG. 13, the sending device maps a 66-bit code block stream 1301 to an OTN frame 1302. For descriptions of the 66-bit code block stream 1301, refer to the foregoing descriptions in any one of FIG. 5 and FIG. 7 to FIG. 12d. The OTN frame 1302 is an example of an optical transport network frame. The OTN frame 1302 is of a structure with four rows and a plurality of columns. The OTN frame 1302 includes an overhead area, a payload area, and a forward error correction (forward error correction, FEC) area. It should be understood that the OTN frame 1302 is merely an example. Another variant of the OTN frame is also applicable to this application, for example, an OTN frame that does not include an FEC area, or for another example, a frame structure with a row quantity and a column quantity that are different from those of the OTN frame 1302.

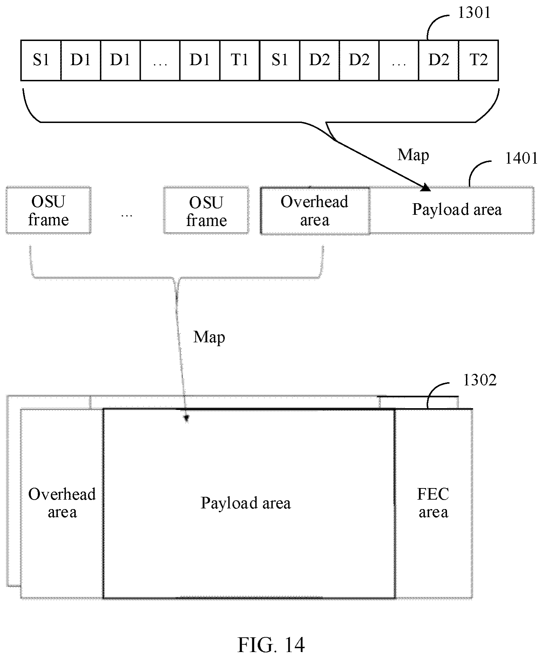

FIG. 14 is a diagram of indirectly mapping a 66-bit code block stream to an OTN frame according to an embodiment of this application. As shown in FIG. 14, the sending device first maps the 66-bit code block stream 1301 to a payload area of one or more OSU frames 1401. The OSU frame 1401 includes an overhead area and a payload area. The overhead area of the OSU frame 1401 is used to carry overhead information. The overhead information includes one or more overhead fields. The payload area of the OSU frame 1401 is used to carry service data, for example, a 66-bit code block stream. It should be understood that a structure of the OSU frame shown in FIG. 14 is merely an example. In another specific implementation, the OSU frame may alternatively be a data structure including an overhead subframe and a payload subframe. This is not limited in this application. After mapping the 66-bit code block stream 1301 to the payload area of the one or more OSU frames 1401, the sending device maps the one or more OSU frames 1401 to the OTN frame 1302. For descriptions of the OTN frame 1302, refer to the descriptions in FIG. 13.

In step 404, the sending device sends the data frame.

The sending device converts an electrical signal of the data frame into an optical signal. The sending device is connected to the receiving device through an optical fiber. The sending device transmits the optical signal of the data frame to the receiving device through the optical fiber. The receiving device may be another OTN device, another MTN device, or the like.

It can be learned from FIG. 4 that the plurality of D1 data code blocks are used to carry content of remaining fields in the MAC frame 1. In actual application, the S1 control code block and the plurality of D1 data code blocks may be used to carry content of remaining fields in the MAC frame 1. The remaining fields may include a DA field, a SA field, a type field, a data field, and an FCS field. In addition, some space of the S1 control code block may be used to carry the first check field 1, and the other space of the S1 control code block and the plurality of D1 data code blocks may be used to carry the content of the remaining fields.

It should be understood that, the S1 control code block carrying the first check field 1 is merely an example provided in this embodiment of this application. In actual application, the sending device may alternatively use the D1 data code block or the T1 control code block to carry the first check field 1.

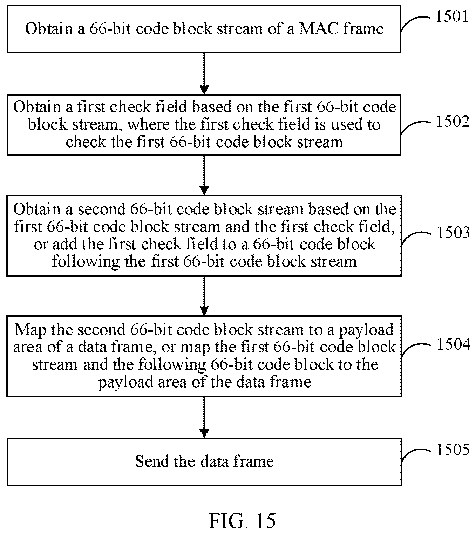

It can be learned from FIG. 4 that the target data may be the 66-bit code block stream or the MAC frame. FIG. 15 is a second schematic flowchart of a data processing method according to an embodiment of this application. As shown in FIG. 15, when target data is a 66-bit code block stream, the data processing method includes the following steps:

In step 1501, a sending device obtains a first 66-bit code block stream of a MAC frame.

In step 1502, the sending device obtains a first check field based on the first 66-bit code block stream, where the first check field is used to check the first 66-bit code block stream.

In step 1503, the sending device obtains a second 66-bit code block stream based on the first 66-bit code block stream and the first check field, or adds the first check field to a 66-bit code block following the first 66-bit code block stream.

In step 1504, the sending device maps the second 66-bit code block stream to a payload area of a data frame, or maps the first 66-bit code block stream and the following 66-bit code block to the payload area of the data frame.

In step 1505, the sending device sends the data frame.

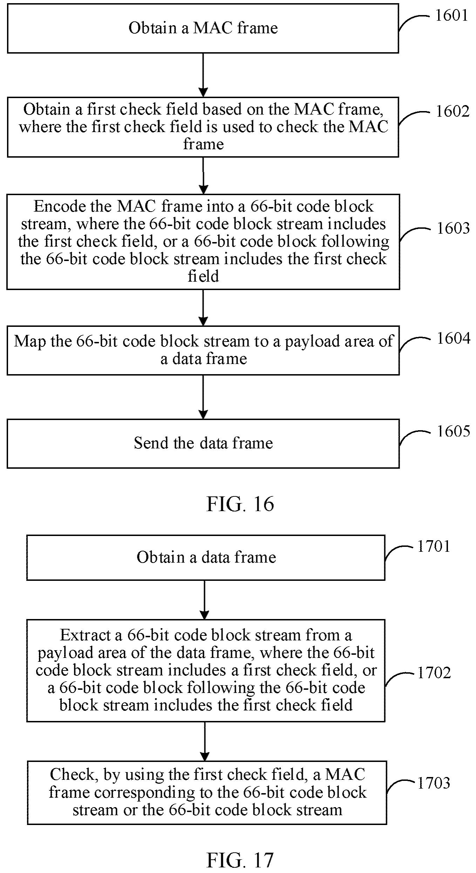

FIG. 16 is a third schematic flowchart of a data processing method according to an embodiment of this application. As shown in FIG. 16, when target data is a MAC frame, the data processing method includes the following steps.

In step 1601, a sending device obtains a MAC frame.

The sending device may receive the MAC frame from a client device. Alternatively, the sending device receives a 66-bit code block stream from a client device. The sending device decodes the 66-bit code block stream into the MAC frame. Alternatively, the sending device generates the MAC frame based on data that needs to be sent. The MAC frame includes an FCS field.

In step 1602, the sending device obtains a first check field based on the MAC frame, where the first check field is used to check the MAC frame.

The first check field is not an FCS field. The FCS field is used to check a DA field, a SA field, a type field, and a DA field. Check objects of the first check field and the FCS field may be different. For example, the first check field is used to check the DA field, the SA field, the type field, the DA field, and the FCS field.

In step 1603, the sending device encodes the MAC frame into a 66-bit code block stream, where the 66-bit code block stream includes the first check field, or a 66-bit code block following the 66-bit code block stream includes the first check field.

In step 1604, the sending device maps the 66-bit code block stream to a payload area of a data frame.

In step 1605, the sending device sends the data frame.

It should be understood that descriptions in FIG. 15 or FIG. 16 are similar to the descriptions in FIG. 4. Therefore, for descriptions in FIG. 15 or FIG. 16, refer to the descriptions in FIG. 4. For example, for descriptions of step 1501, refer to the descriptions of step 401. For another example, for descriptions of step 1503, refer to the descriptions of step 403. Similarly, for descriptions in FIG. 15 or FIG. 16, also refer to the descriptions in FIG. 4. For example, the first check field is not the FCS field.

It can be learned from the foregoing descriptions in FIG. 4, FIG. 15, or FIG. 16 that the sending device is configured to send the data frame to a receiving device. Therefore, the receiving device may receive the data frame, and check the MAC frame or the 66-bit code block stream based on the first check field in the data frame. FIG. 17 is a fourth schematic flowchart of a data processing method according to an embodiment of this application. As shown in FIG. 17, the data processing method includes the following steps.

In step 1701, a receiving device obtains a data frame.

The receiving device may be an OTN device, an MTN device, or the like. The receiving device is connected to a sending device through an optical fiber. The receiving device receives an optical signal of the data frame from the sending device through the optical fiber, and converts the optical signal of the data frame into an electrical signal of the data frame.

In step 1702, the receiving device extracts a 66-bit code block stream from a payload area of the data frame, where the 66-bit code block stream includes a first check field, or a 66-bit code block following the 66-bit code block stream includes the first check field.

Extraction is an inverse process of mapping. The receiving device extracts the 66-bit code block stream from the payload area of the data frame. Specifically, the receiving device extracts a service frame from the payload area of the data frame, and then extracts the 66-bit code block stream from a payload area of the service frame. Alternatively, the receiving device directly extracts the 66-bit code block stream from the payload area of the data frame.

In step 1703, the receiving device checks, by using the first check field, a MAC frame corresponding to the 66-bit code block stream or the 66-bit code block stream.

It can be learned from the foregoing descriptions in FIG. 4 that target data may be the 66-bit code block stream or the MAC frame. When the target data is the 66-bit code block stream, the receiving device checks the 66-bit code block stream based on the first check field. When the target data is the MAC frame, the receiving device is configured to decode the 66-bit code block stream into the MAC frame, and then check the MAC frame based on the first check field.

If the 66-bit code block stream fails to pass the check of the first check field, the receiving device may modify a SYNC field of a T control code block in the 66-bit code block stream to 11 or 00. For example, for the 66-bit code block stream 701 in FIG. 7, if the first 66-bit code block stream fails to pass the check of the first check field 1, the receiving device modifies the SYNC field of the T1 control code block to 11 or 00. Similarly, if the third 66-bit code block stream fails to pass the check of the first check field 2, the receiving device modifies the SYNC field of the T2 control code block to I1 or 00. It can be learned from the foregoing descriptions in FIG. 3 that the correct SYNC field of the T control code block is 10. In subsequent processing, the receiving device can identify the 66-bit code block stream as an incorrect code block stream based on error content of the SYNC field, to discard the 66-bit code block stream.

The receiving device may further transmit the data frame to another device. Before transmitting the data frame to the another device, the receiving device may modify the 66-bit code block stream or the 66-bit code block following the 66-bit code block stream. Specifically, when the first check field is located in the 66-bit code block stream, the receiving device modifies the 66-bit code block stream. When the first check field is located in the 66-bit code block following the 66-bit code block stream, the receiving device modifies the 66-bit code block following the 66-bit code block stream. Descriptions are separately provided below.

When the first check field is located in an S control code block in the 66-bit code block stream, the receiving device replaces the first check field with content of a preamble field in the MAC frame, to obtain a modified 66-bit code block stream. For example, in FIG. 7, the S1 control code block includes a first check field 1. The receiving device replaces the first check field 1 with a preamble field.

When the following 66-bit code block is an S control code, the receiving device replaces the first check field with content of a preamble field in the MAC frame. For example, in FIG. 7, the S2 control code block includes a first check field 1. The receiving device replaces the first check field 1 with a preamble field. When the following 66-bit code block is an I control code block, the receiving device modifies content of the first check field to 0. For example, in FIG. 8, the I1 control code block includes a first check field 1. The receiving device modifies content of the first check field 1 to 0. When the following 66-bit code block is a custom control code block, the receiving device deletes the custom control code block. For example, in FIG. 10, the Z1 control code block includes a first check field 1. The Z2 control code block includes a first check field 2. The receiving device deletes the Z1 control code block and the Z2 control code block.

After the foregoing modification, the receiving device may obtain the modified 66-bit code block stream or the modified following 66-bit code block. The receiving device maps the modified 66-bit code block stream or the modified following 66-bit code block to the payload area of the data frame, and transmits the data frame to another device. For descriptions of mapping, by the receiving device, the modified 66-bit code block stream to the data frame, refer to the descriptions of mapping, by the sending device, the 66-bit code block stream to the data frame in FIG. 4. For example, the receiving device first maps the modified 66-bit code block stream to the payload area of the service frame, and then maps the service frame to the payload area of the data frame.

It should be understood that descriptions in FIG. 17 are similar to the descriptions in FIG. 4, FIG. 15, or FIG. 16. Therefore, for descriptions in FIG. 17, refer to the foregoing descriptions in FIG. 4, FIG. 15, or FIG. 16. For example, the 66-bit code block stream or the 66-bit code block following the 66-bit code block stream includes a second check field. The receiving device checks the first check field based on the second check field. For another example, the first check field includes a first subfield and a second subfield. The first subfield is used to check a length of the 66-bit code block stream. The second subfield is used to check content of the 66-bit code block stream. For another example, the first check field is not an FCS field.

The foregoing describes the data processing methods provided in this application. The following describes a sending apparatus, a receiving apparatus, a sending device, and a receiving device provided in this application.

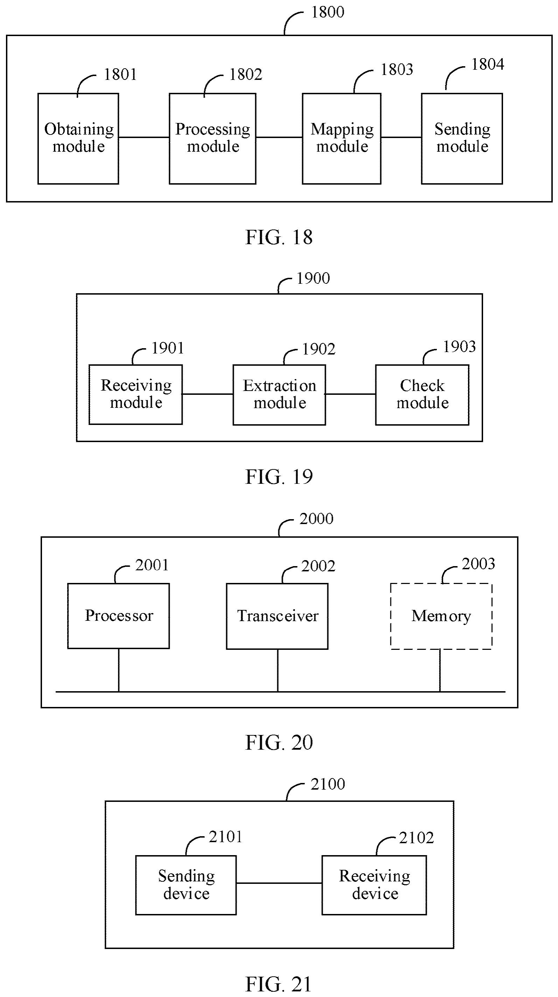

FIG. 18 is a diagram of a structure of a sending apparatus according to an embodiment of this application. As shown in FIG. 18, the sending apparatus 1800 includes an obtaining module 1801, a processing module 1802, a mapping module 1803, and a sending module 1804. The obtaining module 1801 is configured to obtain a 66-bit code block stream of a MAC frame. The processing module 1802 is configured to obtain a first check field based on target data. The first check field is used to check the target data. The target data is the MAC frame or the 66-bit code block stream. The 66-bit code block stream includes the first check field. Alternatively, a 66-bit code block following the 66-bit code block stream includes the first check field. The mapping module 1803 is configured to map the 66-bit code block stream to a payload area of a data frame. The data frame may be an OTN frame, a flexible Ethernet (flexible Ethernet, FlexE) frame, or an MTN frame. The sending module 1804 is configured to send the data frame.

It should be understood that descriptions of the sending apparatus 1800 are similar to the descriptions of the data processing method in FIG. 4, FIG. 15, or FIG. 16. Therefore, for descriptions of the sending apparatus 1800, refer to the foregoing descriptions in FIG. 4, FIG. 15, or FIG. 16. For example, the mapping module 1803 is configured to map the 66-bit code block stream to a service frame, and map the service frame to the payload area of the data frame. For another example, the obtaining module 1801 is configured to receive the 66-bit code block stream from another device. For another example, the first check field is not an FCS field.

FIG. 19 is a diagram of a structure of a receiving apparatus according to an embodiment of this application. As shown in FIG. 19, the receiving apparatus 1900 includes a receiving module 1901, an extraction module 1902, and a check module 1903. The receiving module 1901 is configured to receive a data frame. The extraction module 1902 is configured to extract a 66-bit code block stream from a payload area of the data frame. The 66-bit code block stream includes a first check field. Alternatively, a 66-bit code block following the 66-bit code block stream includes a first check field. The check module 1903 is configured to check, by using the first check field, a MAC frame corresponding to the 66-bit code block stream or the 66-bit code block stream.

It should be understood that the descriptions of the receiving apparatus 1900 are similar to the descriptions of the data processing method in FIG. 4, FIG. 15, FIG. 16, or FIG. 17. Therefore, for descriptions of the receiving apparatus 1900, refer to the foregoing descriptions in FIG. 4, FIG. 15, FIG. 16, or FIG. 17. For example, the check module 1903 is further configured to check the first check field by using a second check field. For another example, the sending apparatus further includes a modification module and a sending module. The modification module is configured to modify the following 66-bit code block. After the following 66-bit code block is modified, the sending module is configured to send the following 66-bit code block to another device. For another example, the first check field is not an FCS field.

FIG. 20 is a diagram of a structure of a communication device according to an embodiment of this application. The communication device may be a sending device or a receiving device. As shown in FIG. 20, the communication device 2000 includes a processor 2001 and a transceiver 2002. The processor 2001 may be a central processing unit (central processing unit, CPU), a network processor (network processor, NP), or a combination of the CPU and the NP. The processor 2001 may further include a hardware chip or another general-purpose processor. The foregoing hardware chip may be an application-specific integrated circuit (application-specific integrated circuit, ASIC), a programmable logic device (programmable logic device, PLD), or a combination thereof. The transceiver 2002 may be an optical transceiver.

When the communication device 2000 is the sending device, the processor 2001 is configured to obtain a 66-bit code block stream of a MAC frame. The processor 2001 is configured to obtain a first check field based on target data. The first check field is used to check the target data. The target data is the MAC frame or the 66-bit code block stream. The 66-bit code block stream includes the first check field. Alternatively, a 66-bit code block following the 66-bit code block stream includes the first check field. The mapping module 1803 is configured to map the 66-bit code block stream to a payload area of a data frame. The transceiver 2002 is configured to send the data frame.

When the communication device 2000 is the receiving device, the transceiver 2002 is configured to receive a data frame. The processor 2001 is configured to extract a 66-bit code block stream from a payload area of the data frame. The 66-bit code block stream includes a first check field. Alternatively, a 66-bit code block following the 66-bit code block stream includes a first check field. The processor 2001 is configured to check, by using the first check field, a MAC frame corresponding to the 66-bit code block stream or the 66-bit code block stream.

In another embodiment, the communication device 2000 may further include a memory 2003. The memory 2003 may be a volatile memory or a nonvolatile memory, or may include both the volatile memory and the nonvolatile memory. The nonvolatile memory may be a read-only memory (read-only memory, ROM), a programmable read-only memory (programmable ROM, PROM), an erasable programmable read-only memory (erasable PROM, EPROM), a flash memory, or the like. The volatile memory may be a random access memory (random access memory, RAM). The memory 2003 may be configured to store a MAC frame or a 66-bit code block stream.

It should be understood that the descriptions of the communication device 2000 are similar to the descriptions of the data processing method in FIG. 4, FIG. 15, FIG. 16, or FIG. 17. Therefore, for descriptions of the communication device 2000, refer to the foregoing descriptions in FIG. 4, FIG. 15, FIG. 16, or FIG. 17. For example, the 66-bit code block stream or the 66-bit code block following the 66-bit code block stream includes a second check field. For another example, the first check field includes a first subfield and a second subfield. For another example, the first check field is not an FCS field.

This application further provides a communication system. FIG. 21 is a diagram of a structure of a communication system according to an embodiment of this application. As shown in FIG. 21, the communication system 2100 includes a sending device 2101 and a receiving device 2102. The sending device 2101 is configured to obtain a 66-bit code block stream of a MAC frame. The MAC frame includes an FCS field. The sending device 2101 is configured to obtain a first check field based on target data. The target data is the MAC frame or the 66-bit code block stream. The 66-bit code block stream includes the first check field. Alternatively, a 66-bit code block following the 66-bit code block stream includes the first check field. The sending device 2101 is configured to map the 66-bit code block stream to a payload area of a data frame. The sending device 2101 sends the data frame to the receiving device 2102. The receiving device 2102 is configured to receive the data frame, extract the 66-bit code block stream from the payload area of the data frame, and check, by using a first check field, the MAC frame corresponding to the 66-bit code block stream or the 66-bit code block stream.

It should be understood that descriptions of the sending device 2101 are similar to the descriptions of the data processing method in FIG. 4, FIG. 15, or FIG. 16. Therefore, for descriptions of the sending device 2101, refer to the foregoing descriptions in FIG. 4, FIG. 15, or FIG. 16. Similarly, descriptions of the receiving device 2102 are similar to the descriptions of the data processing method in FIG. 17. Therefore, for descriptions of the receiving device 2102, refer to the foregoing descriptions in FIG. 17.

An embodiment of this application further provides a data frame. The data frame includes a payload area and an overhead area. The payload area includes a 66-bit code block stream. The 66-bit code block stream includes a first check field. Alternatively, a 66-bit code block following the 66-bit code block stream includes a first check field. The first check field is used to check a MAC frame corresponding to the 66-bit code block stream or the 66-bit code block stream.

It should be understood that descriptions of the data frame are similar to the descriptions of the data frame in FIG. 4, FIG. 15, or FIG. 16. Therefore, for descriptions of the data frame, refer to the foregoing descriptions in FIG. 4, FIG. 15, or FIG. 16. For example, the MAC frame includes an FCS field. The first check field is not an FCS field. For another example, the data frame is an OSU frame, an OTN frame, a FlexE frame, or an MTN frame.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A data processing method, comprising:
obtaining a first 66-bit code block stream of a medium access control MAC frame;
obtaining a first check field based on the first 66-bit code block stream, wherein the first check field is used to check the first 66-bit code block stream;
adding the first check field to a 66-bit code block following the first 66-bit code block stream;
mapping the following 66-bit code block to a payload area of a data frame; and
sending the data frame.

2. The data processing method according to claim 1, wherein the following 66-bit code block is an S control code block, an I control code block, or a custom control code block.

3. The data processing method according to claim 2, wherein a value of a control block type field of the custom control code block is 0x00.

4. The data processing method according to claim 1, wherein
an S control code block in a second 66-bit code block stream is used to carry the first check field.

5. The data processing method according to any one of claims 1 to 4, wherein the first check field comprises a first subfield and a second subfield, wherein
the first subfield is used to check a length of the 66-bit code block stream; and
the second subfield is used to check content of the 66-bit code block stream.

6. The data processing method according to claim 5, wherein the first subfield indicates a quantity of 66-bit code blocks comprised in the 66-bit code block stream.

7. The data processing method according to claim 5 or 6, wherein a size of the first subfield is 2 bytes.

8. The data processing method according to any one of claims 5 to 7, wherein a size of the second subfield is 4 bytes.

9. The data processing method according to any one of claims 1 to 8, wherein the following 66-bit code block further comprises a second check field, and the second check field is used to check the first check field.

10. The data processing method according to claim 9, wherein a size of the second check field is 1 byte.

11. The data processing method according to any one of claims 1 to 10, wherein
mapping the second 66-bit code block stream to the payload area of the data frame comprises: mapping the second 66-bit code block stream to a service frame, and mapping the service frame to the payload area of the data frame.

12. A data processing method, comprising:
obtaining a medium access control MAC frame;
obtaining a first check field based on the MAC frame, wherein the first check field is used to check the MAC frame, and the MAC frame comprises a frame check sequence FCS field;
encoding the MAC frame into a 66-bit code block stream, wherein a 66-bit code block following the 66-bit code block stream comprises the first check field;
mapping the 66-bit code block stream to a payload area of a data frame; and
sending the data frame.

13. A data processing method, comprising:
receiving a data frame;
extracting a 66-bit code block stream from a payload area of the data frame, wherein a 66-bit code block following the 66-bit code block stream comprises a first check field; and
checking the 66-bit code block stream by using the first check field.

14. The data processing method according to claim 13, wherein
that the 66-bit code block stream comprises the first check field comprises: an S control code block in the 66-bit code block stream comprises the first check field; and
the method further comprises:
replacing the first check field with content of a preamble field in a medium access control MAC frame, to obtain a modified 66-bit code block stream; and
outputting the modified 66-bit code block stream.

15. The data processing method according to claim 14, wherein the 66-bit code block following the 66-bit code block stream comprises the first check field, and the method further comprises:
modifying the following 66-bit code block.

16. The data processing method according to claim 15, wherein the following 66-bit code block is an S control code block; and
modifying the following 66-bit code block comprises: replacing the first check field with the content of the preamble field in the MAC frame.

17. The data processing method according to claim 15, wherein the following 66-bit code block is an I control code block; and
modifying the following 66-bit code block comprises: modifying content of the first check field to 0.

18. The data processing method according to claim 15, wherein the following 66-bit code block is a custom control code block; and
modifying the following 66-bit code block comprises: deleting the custom control code block.

19. The data processing method according to any one of claims 13 to 18, wherein the method further comprises:
if the 66-bit code block stream fails to pass the check of the first check field, modifying a synchronization field of a T control code block in the 66-bit code block stream to I1 or 00.

20. The data processing method according to any one of claims 13 to 19, wherein the following 66-bit code block further comprises a second check field, and the method further comprises:
checking the first check field by using the second check field.

21. A sending apparatus, comprising an obtaining module, a processing module, a mapping module, and a sending module, wherein the modules in the sending apparatus are configured to perform the method according to any one of claims 1 to 12.

22. A receiving apparatus, comprising a receiving module, an extraction module, and a check module, wherein the modules in the receiving apparatus are configured to perform the method according to any one of claims 13 to 20.

23. A sending device, comprising a processor and a transceiver, wherein
the processor is configured to perform the method according to any one of claims 1 to 12, to obtain a data frame; and
the transceiver is configured to send the data frame.

24. A receiving device, comprising a processor and a transceiver, wherein
the transceiver is configured to receive a data frame; and
the processor is configured to perform the method according to any one of claims 13 to 20.

25. A communication system, comprising the sending device according to claim 23 and the receiving device according to claim 24.
